# EUROPEAN PATENT SPECIFICATION

(11) **EP 4 212 312 B1**
(45) Date of publication and mention of the grant of the patent: **26.08.2026**
(21) Application number: 22845281.9
(22) Date of filing: 18.07.2022
(51) Int. Cl.: B29C 65/16, B29C 65/74, B29C 65/78

(54) **PACKAGING APPARATUS AND PACKAGING METHOD**
VERPACKUNGSVORRICHTUNG UND VERPACKUNGSVERFAHREN
APPAREIL DE CONDITIONNEMENT ET PROCÉDÉ DE CONDITIONNEMENT

(30) Priority: 21.07.2021 CN 202110826893
(43) Date of publication of application: 19.07.2023
(73) Proprietor: Wuhan Raycus Fiber Laser Technologies Co., Ltd, East Lake Hi-Tech Development Zone Wuhan, Hubei 430000 (CN)
(72) Inventor: BAI, Juanjuan, Wuhan, Hubei 430000 (CN); LI, Yaqi, Wuhan, Hubei 430000 (CN); WU, Zefeng, Wuhan, Hubei 430000 (CN); GAO, Hui, Wuhan, Hubei 430000 (CN); LU, Kunzhong, Wuhan, Hubei 430000 (CN); YAN, Dapeng, Wuhan, Hubei 430000 (CN)
(74) Representative: Osterhoff, Utz
(86) International application number: PCT/CN2022/106316
(87) International publication number: WO 2023/001116

(56) References cited:
- EP-A1- 0 483 569
- CN-A- 106 966 578
- CN-A- 110 655 307
- CN-A- 113 787 722
- US-A1- 2006 289 410
- US-A1- 2011 200 802
- US-A1- 2018 093 345

## Description

### TECHNICAL FIELD

The present application relates to the field of laser packaging technology, and in particular to a packaging device and a packaging method.

### BACKGROUND

Transparent materials are widely used in electronic semiconductors, biomedical, solar cells and other fields because of their unique performance. At present, adhesives are mostly used to bond the surfaces of two transparent materials to package the transparent material. The adhesive packaging method has the advantages of wide material adaptability and can adhere different materials, but there are huge problems regarding service life, packaging performance and packaging strength of the packaging device, as well as environmental protection. In prior art, when the materials are packaged, base material and sub-material are usually clamped by clamps. Using clamps would lead to fragility of product due to local mechanical force, and uneven stress and poor welding consistency due to uneven adhesion. Accurate positioning of the base material and the sub-material cannot be assured, and the product after packaging cannot be stripped conveniently.

US2018/093345A1 discloses a joint structure including a light-absorbable member having at least one opening portion and a light-permeable member superposed on the light-absorbable member so as to cover the opening portion, where a first annular weld part is formed so as to enclose the opening portion and join the light-absorbable member and the light-permeable member, and a second dot-like weld part(s) joining the light-absorbable member and the light-permeable member is/are formed in a position adjacent to the first weld part.

EP0483569A1 discloses a plastic welding apparatus for sealing a first plastic material to a second plastic material. The apparatus uses a laser beam to weld a plastic cover material to a wide variety of shapes and sizes of containers. An optical scanner detects the location of a zone of overlapping material and provides signals to a computer which directs a laser beam through a laser semi-transparent material to a laser-opaque material in the sealing zone. The opaque material converts the laser beam into heat and melts the material to fuse the two materials together. A conveyor or other means, such as a robot can be used to move the containers into position for the welding operation.

Therefore, how to better control the laser packaging of transparent materials is a technical problem that those skilled in the art urgently need to solve.

### SUMMARY

The present application provides a packaging device and a packaging method to solve the problem in the prior art.

A first aspect of the present application provides a packaging method according to claim 1.

In an embodiment, the movable module includes a Z axis and an XY axis, the focusing module is arranged along the Z axis, and the Z axis is configured to map a focus of the laser beam onto an interface at a set position of a fitting portion of the area to be packaged, the pressing module is provided on a plane where the XY axis is located, the XY axis is configured to move the pressing module adsorbing the transparent material to be packaged to adjust a position where the focus of the laser beam irradiates on the interface of the fitting portion of the transparent material to be packaged.

In an embodiment, when adjusting the positions of the transparent material to be packaged and the packaging device, a position of a laser focus of the focusing module along a Z axis is adjusted through Z axis of the movable module, and a position of the pressing module on a plane is adjusted through XY axis of the movable module.

In an embodiment, the packaging device further includes a beam-expansion collimator provided at a set position before incidence of the laser beam at the focusing module.

In an embodiment, the beam-expansion collimator is adjustable in magnification.

In an embodiment, the packaging device further includes a reflector provided at a set position between the beam-expansion collimator and the focusing module.

In an embodiment, the packaging device further includes a paraxial visual module (700) configured to monitor in real time an image of the area to be packaged according to set position and angel.

In an embodiment, the focusing module includes a beam splitter configured to split the received laser beam into multiple laser beams and disperse the multiple laser beams to the area to be packaged.

In an embodiment, the focusing module includes a multifocal beam splitter configured to split the laser beam into multiple laser focuses in a same vertical direction.

The present application can achieve the following technical effects:
(1) By using pressing module to fix transparent material to be packaged, forces applied on the transparent material to be packaged are more uniform, and it is easier to meet seamless requirement for transparent material to be packaged.
(2) By using laser packaging, service life of the transparent material after packaging is prolonged, there is no problem of light glue aging, and the packaging position is less likely to be damaged due to effect of environment temperature.
(3) By using laser packaging technology, the packaging of transparent material can be achieved better. Meanwhile, the laser packaging time is short, which can improve the quality of the packaging.
(4) By using beam splitter, processing by multi-light beams in parallel in XY directions or multi-focus processing in Z direction can be achieved, which meets the diversified packaging requirements of the transparent material, improves the packaging efficiency, and lowers the gap requirement for the transparent material to be packaged.

### BRIEF DESCRIPTION OF THE DRAWINGS

FIG. 1 is a schematic structural view of a packaging device according to an embodiment of the present application.
FIG. 2 is a side view of transparent material to be packaged according to an embodiment of the present application.
FIG. 3 is a top view of the transparent material to be packaged according to an embodiment of the present application.
FIG. 4 is a top view of the transparent material to be packaged according to another embodiment of the present application.
FIG. 5 is a schematic view of multiple laser beams of the beam splitter in the direction of XY axis according to an embodiment of the present application.
FIG. 6 is a schematic view of multiple laser focuses of the multi-focal beam splitter in the direction of Z axis according to an embodiment of the present application.
FIG. 7 is a flowchart of a packaging method according to an embodiment of the present application.

### DETAILED DESCRIPTION OF THE EMBODIMENTS

The following examples are used to explain the present application, not to limit the scope of the present application.

### Examples

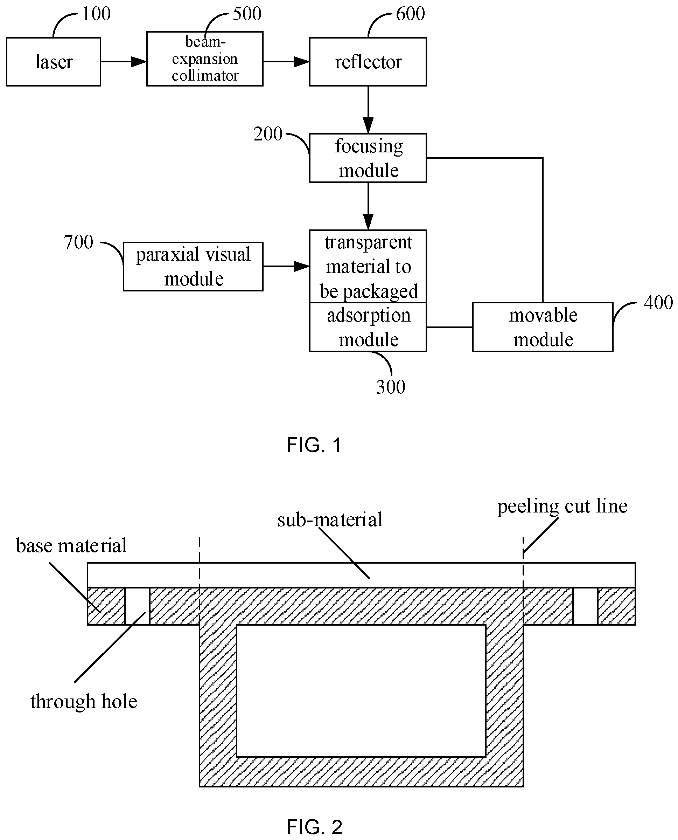

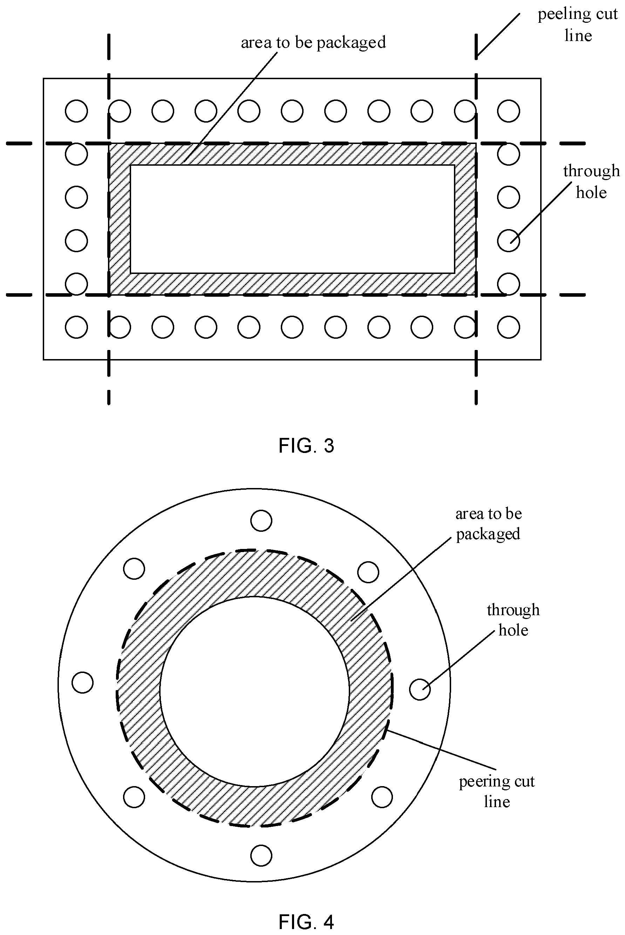

The packaging device of the present application is configured to package transparent material to be packaged. The transparent material to be packaged include a base material and a sub-material, and the sub-material is fitted over the base material. As shown in FIG. 1 to FIG. 4, the packaging device of the present application is configured to package transparent material to be packaged. The transparent material to be packaged include a base material and a sub-material attached to the base material. The transparent material to be packaged includes an area to be packaged and a fitting area surrounding the area to be packaged. The base material is provided with a through hole within the fitting area, and the sub-material is configured to cover the through hole.

The packaging device includes a focusing module 200, a pressing module 300 and a movable module 400.

As shown in FIG. 1, the laser 100 is configured to generate laser beams and transmits the laser beam to the focusing module 200.

In the embodiment of the present application, the laser 100 is an ultra-short pulse laser. Particularly, the pulse width of the laser 100 is 100FS-15PS. When the transparent material to be packaged is packaged by the ultra -short pulse laser, due to the extremely short reaction time between the laser and the transparent material to be packaged, the problem of heat damage caused by heat diffusion and heat accumulation can eliminated, and the packaging quality of the transparent material to be packaged can be improved.

The focusing module 200 is configured to receive a laser beam and irradiate the laser beam that has been converged towards the area to be packaged.

The pressing module 300 and the focusing module 200 are fixed to the movable module 400, and the movable module 400 is configured to control a plane position of the pressing module 300 and a vertical position of the focusing module 200.

The pressing module 200 is configured to adsorb the sub-material via the through hole.

As shown in FIG. 2, in actual application, the sub-material is provided over the base material. Since the base material is provided with through holes at the area to be packaged, when the portion of the base material at the through holes is adsorbed on the pressing module 300, the sub-material is adsorbed with the base material by the negative pressure generated by the through holes.

Specifically, the movable module 400 includes Z axis and XY axis.

The focusing module 200 is provided along the Z axis of the movable module 400, and the Z axis of the movable module 400 is configured to adjust the position of the focusing module 200 in the direction of the Z axis. The laser 100 transmits the generated laser beam to the focusing module 200. By adjusting the position of the focusing module 200 in the direction of the Z axis using the Z axis of the movable module 400, the laser focus after the convergence of the laser beam by the focusing module 200 is irradiated onto the interface of the area to be packaged.

The pressing module 300 is provided in the plane where the XY axis of the movable module 400 is located, and the transparent material to be packaged is adsorbed by the pressing module 300. The XY axis is configured to move the pressing module 300 which has adsorbed the transparent material to be packaged, so that the focus of the laser beam is irradiated onto the interface of the fitting area of the transparent material to be packaged.

Specifically, the movable module 400 includes the XY axis and the Z axis. The XY axis is connected to the pressing module 300, and is configured to adjust the position of the pressing module 300 in the plane. The Z axis is connected to the focusing module 200, and is configured to adjust the position of the focusing module 200 along the Z axis. After the transparent material to be packaged is hold in place by the pressing module 300, the XY axis can control the pressing module 300 to move in the plane according to a set track. The Z axis is mainly configured to adjust the position of the focusing module 200 along the Z axis. By adjusting the distance of the focusing module 200 relative to the base material and the sub-material of the transparent material to be packaged, the focus of the laser beam of the focusing module 200 falls on the interface of the area to be packaged, so as to effectively package the transparent material.

In the embodiments of the present application, since the base material and the sub-material of the transparent material to be packaged are package by laser packaging, the base material of the base material to be packaged is adsorbed by the pressing module 300. Besides, since the base material is provided with through holes, while the pressing module 300 adsorbs the base material, the sub-material provided on the base material can also be adsorbed by the negative pressure generated via the through holes, thereby achieving stable fixation of the base material and the sub-material as well as stability during laser packaging. Compared with common mechanical clamps, the adsorbing module 300 closely fits the base material and the sub-material of the transparent material to be packaged, which prevents fragility of product due to local mechanical force and uneven stress and poor welding consistency due to uneven adhesion.

It should be noted that when the base material and sub-material of the transparent material are packaged by the laser packaging, the positions of the through holes are not the positions of the laser packaging. The positions of laser packaging are at inner side of the positions of the through holes. A peeling cut line is provided between the area to be packaged and the through holes. After laser packaging of the base material and sub-material of the transparent material, it is necessary to peel off a molded product portion of the transparent material to be packaged that has been laser packaged, while retaining the parts of the base material and sub-material that are adsorbed by the pressing module 300 on the pressing module 300. As shown in FIG. 2 to FIG. 4, the area within the peeling cut line is the molded product portion that has been laser packaged, while the area outside of the peeling cut line, including the through holes are the parts remained on the pressing module 300.

The packaging device also includes a beam-expansion collimator 500, which is provided at a set position before incidence of the laser beam at the focusing module 200. The beam-expansion collimator 500 is configured to adjust the laser beam emitted by the laser 100 to a set spot size and transmit it to the focusing module 200.

The laser beam after the beam-expansion collimator 500 needs to be focused by the focusing module 200, to achieve aggregation of the laser energy. The focusing module 200 is set along the Z axis of the movable module 400. By adjusting the position of the focusing module 200 along the Z axis of the movable module 400, the focus of the laser beam can be irradiated onto the interface of the area to be packaged.

The peak power density and ultra-strong light characteristics at the focus of the laser beam generated by the focusing module 200 lead to non-linear absorption and melting in the medium, thereby realizing the packaging of the base material and sub-material of the transparent material to be packaged. The focusing module 200 can be a high-power microscopic microscope to achieve the non-linear absorption of the material at the interface of the area to be packaged and achieve the purpose of packaging.

The packaging device also includes a reflector 600, which is provided at a set position between beam-expansion collimator 500 and the focusing module 200. The reflector 600 is configured to adjust the propagation direction of the laser beam, so that the laser beam is transmitted to a set position of the focusing module 200. After providing the reflector 600, the angle of the focusing module 200 relative to the beam-expansion collimator 500 can be flexibly adjusted. By using the reflector 600, the laser beam output from the beam-expansion collimator 500 can be irradiated onto the focusing module 200 at a set angle.

The beam-expansion collimator 500 is adjustable in magnification, which is configured to adjust the laser beam of the laser 100 to multiple spot sizes.

The packaging device further includes a paraxial visual module 700, which is configured to acquire in real time an image of the area to be packaged according to set position and angel, so as to monitor the fitting of the area to be packaged as well as the alignment of the focus of the laser beam output from the focusing module 200 on the interface of the area to be packaged. The paraxial visual module 700 includes an image acquisition equipment. By collecting in real time the image information of the area to be packaged, whether the relative positioning of the area to be packaged is accurate can be determined, so as to achieve accurate packaging of the base material and the sub-material of the transparent material to be packaged.

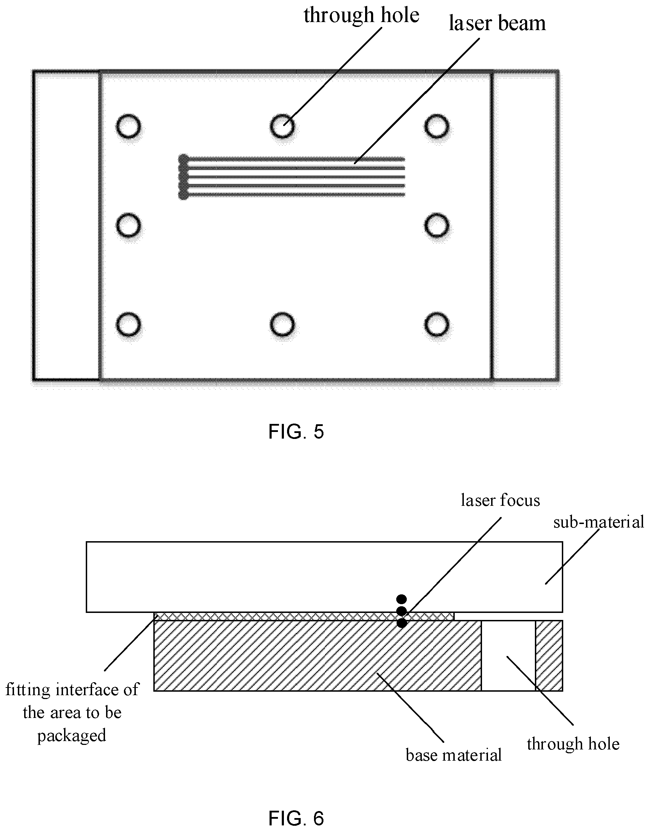

As shown in FIG. 5, the focusing module 200 includes a beam splitter, which is configured to split the received laser beam into multiple laser beams and irradiate the multiple laser beams in parallel to the area to be packaged. The beam splitter is configured to realize simultaneous packaging of multiple regions of the area to be packaged. The beam splitter can divide the laser beam into multiple laser beams, each of which is irradiated onto different positions of the XY plane of the area to be packaged, so as to realize parallel processing and improve packaging efficiency.

As shown in FIG. 6, the focusing module 200 includes a multi-focal beam splitter, which is configured to split the laser beam so that the laser beam has multiple laser focuses in a same vertical direction thereby realizing packaging of the transparent material to be packaged without optical contact.

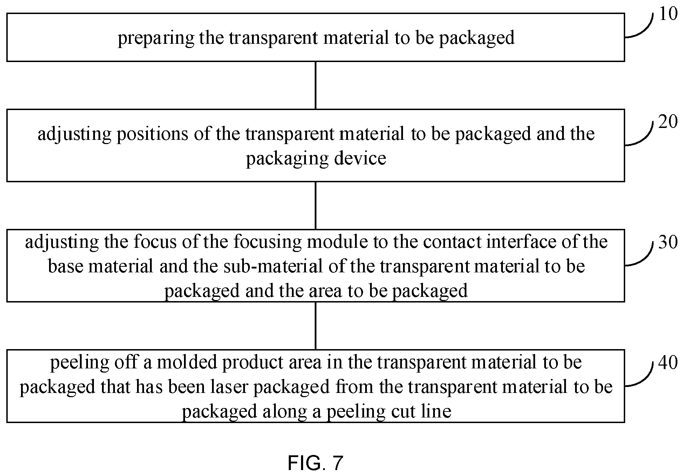

As shown in FIG. 7, the second aspect of the present application provides a packaging method that uses the packaging device according to the embodiments of the present application. The package method includes:

Step 10, preparing the transparent material to be packaged, where the transparent material to be packaged include the base material and the sub-material, the sub-material is fitted over the base material, the transparent material to be packaged includes an area to be packaged and a fitting area surrounding the area to be packaged, the base material is provided with a through hole within the fitting area, the sub-material is configured to cover the through hole.

Step 20, adjusting positions of the transparent material to be packaged and the packaging device, providing the base material of the transparent material to be packaged on the pressing module 300, and setting the area to be packaged directly below the laser beam of the focusing module 200.

Step 30, adjusting a focus of the focusing module 200 to a fitting interface of the area to be packaged, where the movable module 400 moves according a set moving track, to complete packaging of the base material and the complementary of the transparent material to be packaged. Specifically, the laser parameters of the laser 100 are determined by the packaging requirements of the transparent material to be packaged. The moving track of the movable module 400 is determined by the packaging shape of the transparent material to be packaged. The moving track of the movable module 400 can be linear, and other forms such as spiral, depending on the packaging shape of the transparent material.

Step 40, peeling off a molded product area in the transparent material to be packaged that has been laser packaged from the transparent material to be packaged along a peeling cut line, where the molded product area is a part of the transparent material to be packaged.

When adjusting the positions of the transparent material and the packaging device, the position of the laser focus of the focusing module 200 along the Z axis is adjusted through the Z axis of the movable module 400. The position of the pressing module 300 in the plane is adjusted through the XY axis of the movable module 400.

In this specification, the description of the reference terms such as "in an example", "in another example", "exemplary" or "in specific examples", etc. is intended that the specific characteristics, structure, materials, or characteristics described in conjunction with the embodiment or example are contained in at least one embodiment or example of the present application. In this specification, the illustrative reference of the above terms does not necessarily refer to the same embodiment or example. Moreover, the specific characteristics, structure, materials, or features described can be combined in an appropriate way in one or more embodiments or examples.

### Industrial applicability

Using the above technical solutions of the embodiments of the present application, packaging of the transparent material to be packaged can be realized, and force applied on the transparent material to be packaged during fixation is uniform.

## Claims

1. A packaging method using a packaging device, wherein the packaging device is configured to package transparent material to be packaged, wherein the transparent material to be packaged comprises a base material and a sub-material fitted over the base material, the transparent material to be packaged comprises an area to be packaged and a fitting area surrounding the area to be packaged, the base material is provided with a through hole within the fitting area, the sub-material is configured to cover the through hole,
wherein the packaging device comprises a focusing module (200), a pressing module (300) and a movable module (400),
wherein the focusing module (200) is configured to receive a laser beam and irradiate the laser beam that has been converged towards the area to be packaged,
wherein the pressing module (300) and the focusing module (200) connect the movable module (400), the movable module (400) being configured to control a plane position of the pressing module (300) and a vertical position of the focusing module (200), and
the pressing module (300) being configured to adsorb the sub-material via the through hole, wherein the packaging method comprises:
preparing the transparent material to be packaged,
adjusting positions of the transparent material to be packaged and the packaging device, providing the base material of the transparent material to be packaged on the pressing module (300), and setting the area to be packaged directly below the laser beam of the focusing module (200),
adjusting a focus of the focusing module (200) to a fitting interface of the area to be packaged, wherein the movable module (400) drives the focusing module (200) to move in a plane perpendicular to the laser beam according a set moving track, to complete packaging of the area to be packaged, and
peeling off a molded product area in the transparent material to be packaged that has been laser packaged from the transparent material to be packaged along a peeling cut line.

2. The method according to claim 1, wherein the movable module (400) comprises a Z axis and an XY axis, the focusing module (200) is arranged along the Z axis, and the Z axis is configured to map a focus of the laser beam onto an interface at a set position of a fitting portion of the area to be packaged,
the pressing module (300) is provided on a plane where the XY axis is located, the XY axis is configured to move the pressing module (300) adsorbing the transparent material to be packaged to adjust a position where the focus of the laser beam irradiates on the interface of the fitting portion of the transparent material to be packaged.

3. The method according to claim 2, wherein when adjusting the positions of the transparent material to be packaged and the packaging device, a position of a laser focus of the focusing module (200) along a Z axis is adjusted through Z axis of the movable module (400), and a position of the pressing module on a plane is adjusted through XY axis of the movable module (400).

4. The method according to claim 1, wherein the packaging device further comprises a beam-expansion collimator (500) provided at a set position before incidence of the laser beam at the focusing module (200).

5. The method according to claim 4, wherein the beam-expansion collimator (500) is adjustable in magnification.

6. The method according to claim 4, wherein the packaging device further comprises a reflector (600) provided at a set position between the beam-expansion collimator (500) and the focusing module (200).

7. The method according to claim 1, wherein the packaging device further comprises a paraxial visual module (700) configured to monitor in real time an image of the area to be packaged according to set position and angel.

8. The method according to claim 1, wherein the focusing module (200) comprises a beam splitter configured to split the received laser beam into multiple laser beams and disperse the multiple laser beams to the area to be packaged.

9. The method according to claim 1, wherein the focusing module (200) comprises a multifocal beam splitter configured to split the laser beam into multiple laser focuses in a same vertical direction.

## Patentansprüche

1. Verkapselungsverfahren unter Verwendung einer Verkapselungsvorrichtung, wobei die Verkapselungsvorrichtung dazu konfiguriert ist, ein zu verkapselndes transparentes Material zu verkapseln, wobei das zu verkapselnde transparente Material ein Basismaterial und ein auf das Basismaterial aufgesetztes Submaterial umfasst, wobei das zu verkapselnde transparente Material einen zu verkapselnden Bereich und einen Fügebereich umfasst, der den zu verkapselnden Bereich umgibt, wobei das Basismaterial mit einem Durchgangsloch innerhalb des Fügebereichs versehen ist, wobei das Submaterial dazu konfiguriert ist, das Durchgangsloch abzudecken,
wobei die Verkapselungsvorrichtung ein Fokussiermodul (200), ein Pressmodul (300) und ein Bewegungsmodul (400) umfasst,
wobei das Fokussiermodul (200) dazu konfiguriert ist, einen Laserstrahl zu empfangen und den konvergierten Laserstrahl in Richtung des zu verkapselnden Bereichs abzustrahlen,
wobei das Pressmodul (300) und das Fokussiermodul (200) mit dem Bewegungsmodul (400) verbunden sind, wobei das Bewegungsmodul (400) dazu konfiguriert ist, eine Position des Pressmoduls (300) in einer Ebene und eine vertikale Position des Fokussiermoduls (200) zu steuern, und
wobei das Pressmodul (300) dazu konfiguriert ist, das Submaterial über das Durchgangsloch anzusaugen, wobei das Verkapselungsverfahren umfasst:
Bereitstellen des zu verkapselnden transparenten Materials,
Einstellen der Positionen des zu verkapselnden transparenten Materials und der Verkapselungsvorrichtung, Bereitstellen des Basismaterials des zu verkapselnden transparenten Materials auf dem Pressmodul (300) und Anordnen des zu verkapselnden Bereichs direkt unter dem Laserstrahl des Fokussiermoduls (200),
Einstellen eines Fokus des Fokussiermoduls (200) auf eine Fügegrenzfläche des zu verkapselnden Bereichs, wobei das Bewegungsmodul (400) das Fokussiermodul (200) gemäß einer eingestellten Bewegungsbahn dazu antreibt, sich in einer Ebene senkrecht zu dem Laserstrahl zu bewegen, um das Verkapseln des zu verkapselnden Bereichs abzuschließen, und
Ablösen eines geformten Produktbereichs im zu verkapselnden transparenten Material, das mittels Laser verkapselt wurde, entlang einer Ablöslinie vom zu verkapselnden transparenten Material.

2. Verfahren nach Anspruch 1, wobei das Bewegungsmodul (400) eine Z-Achse und eine XY-Achse umfasst, das Fokussiermodul (200) entlang der Z-Achse angeordnet ist und die Z-Achse dazu konfiguriert ist, einen Fokus des Laserstrahls auf eine Grenzfläche an einer eingestellten Position eines Fügeabschnitts des zu verkapselnden Bereichs abzubilden,
wobei das Pressmodul (300) auf einer Ebene vorgesehen ist, in der sich die XY-Achse befindet, wobei die XY-Achse dazu konfiguriert ist, das Pressmodul (300), das das zu verkapselnde transparente Material ansaugt, zu bewegen, um eine Position anzupassen, an der die Grenzfläche des Fügeabschnitts des zu verkapselnden transparenten Materials mit dem Fokus des Laserstrahls bestrahlt wird.

3. Verfahren nach Anspruch 2, wobei beim Einstellen der Positionen des zu verkapselnden transparenten Materials und der Verkapselungsvorrichtung eine Position eines Laserfokus des Fokussiermoduls (200) entlang einer Z-Achse durch die Z-Achse des Bewegungsmoduls (400) eingestellt wird und eine Position des Pressmoduls auf einer Ebene durch die XY-Achse des Bewegungsmoduls (400) eingestellt wird.

4. Verfahren nach Anspruch 1, wobei die Verkapselungsvorrichtung ferner einen Strahlaufweitungskollimator (500) umfasst, der an einer eingestellten Position vor dem Einfall des Laserstrahls auf das Fokussiermodul (200) vorgesehen ist.

5. Verfahren gemäß Anspruch 4, wobei der Strahlaufweitungskollimator (500) hinsichtlich seiner Vergrößerung einstellbar ist.

6. Verfahren nach Anspruch 4, wobei die Verkapselungsvorrichtung ferner einen Reflektor (600) umfasst, der an einer eingestellten Position zwischen dem Strahlaufweitungskollimator (500) und dem Fokussiermodul (200) vorgesehen ist.

7. Verfahren nach Anspruch 1, wobei die Verkapselungsvorrichtung ferner ein paraxiales Sichtmodul (700) umfasst, das dazu konfiguriert ist, ein Bild des zu verkapselnden Bereichs gemäß einer eingestellten Position und einem eingestellten Winkel in Echtzeit zu überwachen.

8. Verfahren nach Anspruch 1, wobei das Fokussiermodul (200) einen Strahlteiler umfasst, der dazu konfiguriert ist, den empfangenen Laserstrahl in mehrere Laserstrahlen aufzuteilen und die mehreren Laserstrahlen auf den zu verkapselnden Bereich zu verteilen.

9. Verfahren nach Anspruch 1, wobei das Fokussiermodul (200) einen Multifokal-Strahlteiler umfasst, der dazu konfiguriert ist, den Laserstrahl in mehrere Laserfokuspunkte in einer gleichen vertikalen Richtung aufzuteilen.

## Revendications

1. Procédé de conditionnement utilisant un dispositif de conditionnement, dans lequel le dispositif de conditionnement est configuré pour conditionner un matériau transparent à conditionner, le matériau transparent à conditionner comprenant un matériau de base et un sous-matériau ajusté sur le matériau de base, le matériau transparent à conditionner comprenant une zone à conditionner et une zone d'ajustement entourant la zone à conditionner, le matériau de base étant pourvu d'un trou traversant à l'intérieur de la zone d'ajustement, et le sous-matériau étant configuré pour recouvrir le trou traversant,
dans lequel le dispositif de conditionnement comprend un module de focalisation (200), un module de pressage (300) et un module mobile (400), dans lequel le module de focalisation (200) est configuré pour recevoir un faisceau laser et irradier le faisceau laser qui a été convergé vers la zone à conditionner,
dans lequel le module de pressage (300) et le module de focalisation (200) sont reliés au module mobile (400), le module mobile (400) étant configuré pour contrôler une position horizontale du module de pressage (300) et une position verticale du module de focalisation (200), et
le module de pressage (300) étant configuré pour adsorber le sous-matériau à travers le trou traversant, dans lequel le procédé de conditionnement comprend :
préparer le matériau transparent à conditionner,
ajuster des positions du matériau transparent à conditionner et du dispositif de conditionnement, fournir le matériau de base du matériau transparent à conditionner sur le module de pressage (300), et régler la zone à conditionner juste sous le faisceau laser du module de focalisation (200),
régler un foyer du module de focalisation (200) à une interface d'ajustement de la zone à conditionner, dans lequel le module mobile (400) entraîne le module de focalisation (200) à se déplacer dans un plan perpendiculaire au faisceau laser selon une trajectoire de déplacement définie, afin de compléter le conditionnement de la zone à conditionner, et
décoller une zone de produit moulé dans le matériau transparent à conditionner qui a été conditionnée au laser du matériau transparent à conditionner le long d'une ligne de découpe.

2. Procédé selon la revendication 1, dans lequel le module mobile (400) comprend un axe Z et un axe XY, le module de focalisation (200) est disposé le long de l'axe Z, et l'axe Z est configuré pour projeter un foyer du faisceau laser sur une interface à une position définie d'une partie d'ajustement de la zone à conditionner,
le module de pressage (300) est prévu sur un plan où se trouve l'axe XY, l'axe XY est configuré pour déplacer le module de pressage (300) qui absorbe le matériau transparent à conditionner afin d'ajuster une position où le foyer du faisceau laser irradie l'interface de la partie d'ajustement du matériau transparent à conditionner.

3. Procédé selon la revendication 2, dans lequel, lors du réglage des positions du matériau transparent à conditionner et du dispositif de conditionnement, une position d'un foyer laser du module de focalisation (200) le long de l'axe Z est réglée par l'axe Z du module mobile (400), et une position du module de pression sur un plan est réglée par l'axe XY du module mobile (400).

4. Procédé selon la revendication 1, dans lequel le dispositif de conditionnement comprend en outre un collimateur d'expansion de faisceau (500) prévu à une position définie avant l'incidence du faisceau laser au module de focalisation (200).

5. Procédé selon la revendication 4, dans lequel le collimateur d'expansion de faisceau (500) est réglable en grossissement.

6. Procédé selon la revendication 4, dans lequel le dispositif de conditionnement comprend en outre un réflecteur (600) prévu à une position définie entre le collimateur d'expansion de faisceau (500) et le module de focalisation (200).

7. Procédé selon la revendication 1, dans lequel le dispositif de conditionnement comprend en outre un module visuel paraxial (700) configuré pour surveiller en temps réel une image de la zone à conditionner en fonction d'une position et d'un angle définis.

8. Procédé selon la revendication 1, dans lequel le module de focalisation (200) comprend un diviseur de faisceau configuré pour diviser un faisceau laser reçu en plusieurs faisceaux laser et disperser les plusieurs faisceaux laser sur la zone à conditionner.

9. Procédé selon la revendication 1, dans lequel le module de focalisation (200) comprend un diviseur de faisceau multifocal configuré pour diviser un faisceau laser en plusieurs foyers laser dans une même direction verticale.
